# EUROPEAN PATENT APPLICATION

(11) **EP 4 477 998 A1**
(43) Date of publication of application: **18.12.2024**
(21) Application number: 23752676.9
(22) Date of filing: 25.01.2023
(51) Int. Cl.: G01C 21/36

(54) **INFORMATION PROCESSING DEVICE, INFORMATION PROCESSING METHOD, AND INFORMATION PROCESSING PROGRAM**

(30) Priority: 08.02.2022 JP 2022018279
(71) Applicant: Pioneer Corporation, Tokyo 113-0021 (JP)
(72) Inventor: NAKAMURA, Takeshi, Kawagoe-shi, Saitama 350-8555 (JP); NAKAGAWA, Takeshi, Kawagoe-shi, Saitama 350-8555 (JP)
(74) Representative: Hoffmann Eitle
(86) International application number: PCT/JP2023/002281
(87) International publication number: WO 2023/153211

(57) **Abstract**

An information processing device (100) outputs voice navigation according to the actual location of a vehicle; and includes an obtaining unit (132) that obtains actual location information indicating the actual location of the vehicle and obtains running history information indicating the running history of the vehicle, and includes an estimating unit (135) that, based on the actual location information and the running history information, estimates the duration for which voice navigation need not be output.

## Description

### Field

The application disclosed herein is related to an information processing device, an information processing method, and an information processing program.

### Background

Conventionally, an information processing device has been proposed that is equipped with a navigation function by which a route search from the point of departure up to the destination as set by the driver is performed using map data, and a guided route is shown according to the search result. Such an information processing device outputs voice navigation about the route guidance (such as guiding about right turns and left turns), traffic information (congestion/traffic restrictions/accident-prone locations in the surrounding area), and recommendations information (recommendations about surrounding facilities). Meanwhile, in such an information processing device, even when no route is set in the navigation function, voice navigation such as traffic information and recommendations information is still output.

Among such information processing devices, there are known information processing devices in which advertisement information is output at predetermined timings and an advertisement rate is applied so as to make the navigation function available at no charge. For example, an information processing device is known that includes an output control unit which, at a predetermined timing that does not clash with the output timing of voice navigation to be output during the travel to the destination, causes an output unit to output a voice advertisement.

### Citation List

### Patent Literature

[Patent Literature 1] Japanese Patent Application Laid-open No. 2017-58301

### Summary

### Technical Problem

However, in the conventional technology, it is not always possible to enhance the output effect of the audio content. For example, in the conventional technology, it is nothing more than outputting a voice advertisement at a predetermined timing that does not clash with the output timing of voice navigation to be output during the travel to the destination. Hence, for example, while a voice advertisement is being output, voice navigation interrupts the voice advertisement thereby possibly interfering with the voice advertisement. Thus, in the conventional technology, there is room for improvement in regard to enhancing the output effect of the audio content such as a voice advertisement.

The application concerned provides an information processing device, an information processing method, and an information processing program that enable enhancing the output effect of the audio content.

### Solution to Problem

An information processing device that outputs voice navigation according to actual location of vehicle, the information processing device includes an obtaining unit that obtains actual location information indicating actual location of the vehicle, and running history information indicating running history of the vehicle; and an estimating unit that, based on the actual location information and the running history information, estimates duration for which the voice navigation need not be output.

An information processing method implemented in an information processing device that outputs voice navigation according to actual location of vehicle, the information processing method includes an obtaining step that includes obtaining actual location information indicating actual location of the vehicle, and running history information indicating running history of the vehicle; and an estimating step that, based on the actual location information and the running history information, includes estimating duration for which the voice navigation need not be output.

An information processing program that causes a computer, which is included in an information processing device that outputs voice navigation according to actual location of vehicle, executes an obtaining step that includes obtaining actual location information indicating actual location of the vehicle, and running history information indicating running history of the vehicle; and an estimating step that, based on the actual location information and the running history information, includes estimating duration for which the voice navigation need not be output.

### Brief Description of Drawings

FIG. 1 is a diagram illustrating an exemplary configuration of an information processing system according to an embodiment.
FIG. 2 is a diagram illustrating an exemplary configuration of an information processing device according to the embodiment.
FIG. 3 is a flowchart for explaining the flow of information processing performed according to the embodiment.
FIG. 4 is a diagram for explaining an example of the information processing performed according to a modification example.
FIG. 5 is a hardware configuration diagram illustrating an exemplary computer for implementing the functions of the information processing device. Description of Embodiments

An illustrative embodiment (hereinafter, called "embodiment") of the present invention is described below with reference to the accompanying drawings. However, the present invention is not limited by the embodiment described below. Moreover, in the drawings, the same constituent elements are referred to by the same reference numerals.

### (Embodiment)

### [1. Configuration of information processing system]

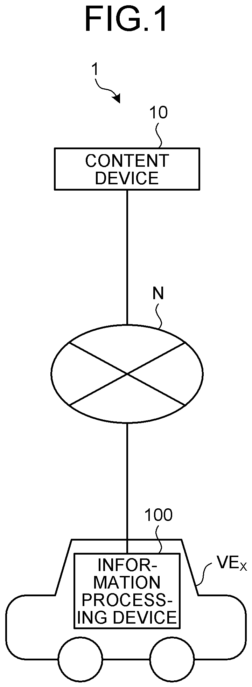

Firstly, explained below with reference to FIG. 1 is a configuration of an information processing system according to the embodiment. FIG. 1 is a diagram illustrating an exemplary configuration of the information processing system according to the embodiment. As illustrated in FIG. 1, an information processing system 1 includes a content device 10 and an information processing device 100. The content device 10 and the information processing device 100 are connected to each other in a wired manner or a wireless manner via a predetermined network N. Meanwhile, the information processing system 1 illustrated in FIG. 1 can include a plurality of content devices 10 and a plurality of information processing devices 100.

The content device 10 is a server device that delivers audio content to the information processing device 100. For example, the content device 10 delivers content including only audio, such as voice advertisements. Alternatively, the content device 10 can deliver content including audio and video. In the following explanation, when simply "content" is written, it implies audio content.

The information processing device 100 outputs voice navigation according to the actual location of the concerned vehicle. More particularly, the information processing device 100 outputs voice navigation about the route guidance (such as guiding about right turns and left turns), traffic information (congestion/traffic restrictions/accident-prone locations in the surrounding area), and recommendations information (recommendations about surrounding facilities). Thus, more particularly, the information processing device 100 is equipped with the navigation function. For example, the information processing device 100 is a stationary navigation device installed in a vehicle. Meanwhile, the information processing device 100 is not limited to be a navigation device, and can alternatively be a handheld terminal device such as a smartphone used by a passenger in the concerned vehicle. For example, the information processing device 100 can be a terminal device that belongs to a user and that is installed with an application for implementing the navigation function.

Moreover, based on actual location information indicating the actual location of the concerned vehicle and based on running history information indicating the running history of the concerned vehicle, the information processing device 100 estimates the duration for which voice navigation need not be output. While the vehicle is running on a travel route that is frequently travelled (in the following explanation, sometimes referred to as a familiar travel route), the information processing device 100 is equipped with a function by which it is considered that the driver of the vehicle has a good knowledge of that particular travel route, and hence voice navigation for a travel route such as route guidance (such as guiding about right turns and left turns), traffic information (congestion/traffic restrictions/accident-prone locations in the surrounding area), and recommendations information (recommendations about surrounding facilities) that is repeated every time the vehicle runs on a travel route is not output (i.e., voice navigation is skipped). Thus, while the vehicle is running on a familiar travel route, as a result of being able to skip the output of voice navigation, the information processing device 100 estimates that the period of time for which the vehicle is running on a familiar road represents the period of time in which voice navigation need not be output. That is, the information processing device 100 estimates the duration for which the vehicle is running on a familiar travel route as the duration for which voice navigation need not be output. Moreover, the information processing device 100 receives a variety of content from the content device 10. Then, from among the received content, the information processing device 100 selects such content which is related to the familiar travel route on which the vehicle is running at present, which is not about the voice navigation repeated every time the vehicle runs on a travel route, and which fits within the duration for which voice navigation need not be output (for example, the duration for which the vehicle is running on the familiar travel route). Subsequently, during the period of time for which voice navigation need not be output, the information processing device 100 outputs the selected content.

Thus, for example, even when a route is not set in the navigation function of the information processing device 100, based on the running history information of the vehicle, the information processing device 100 can predict the duration of the recent unoccupied time in which voice navigation was not output. Moreover, as a result of being able to predict the duration of the recent unoccupied time in which voice navigation was not output, the information processing device 100 can selectively output the content that fits within the concerned duration. Hence, for example, when an audio output, such as a news or an advertisement, is discontinued midway; the information processing device 100 can output, at a stretch without breaking continuity, such content which easily causes a loss of the content-wise relevance before and after the discontinuation. Moreover, the information processing device 100 can selectively output, from among long-version voice advertisements and short-version voice advertisements, the advertisements that fit within the duration. Hence, the information processing device 100 can make the audio content easy to understand for the listener of the audio content, thereby becoming able to enhance the output effect of the audio content.

### [2. Configuration of information processing device]

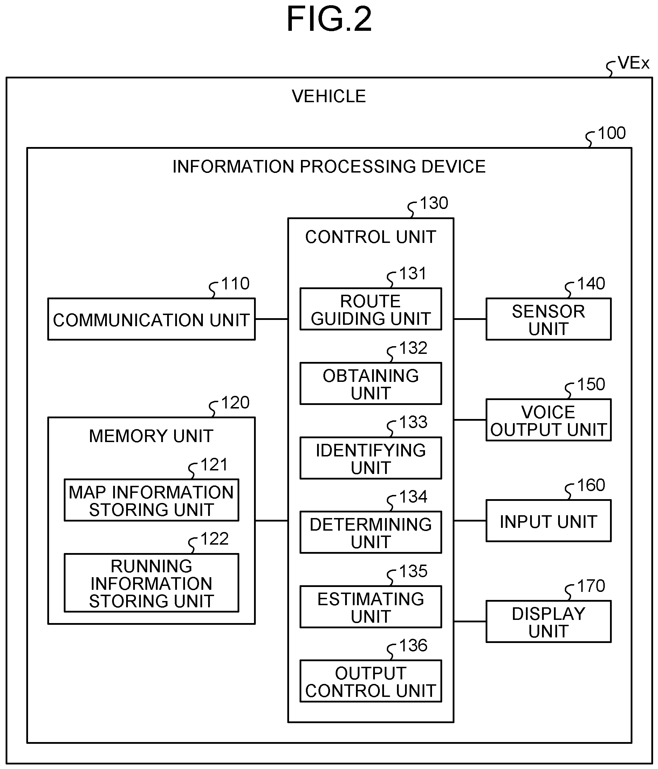

Explained below with reference to FIG. 2 is a configuration of the information processing device according to the embodiment. FIG. 2 is a diagram illustrating an exemplary configuration of the information processing device according to the embodiment. As illustrated in FIG. 2, the information processing device 100 includes a communication unit 110, a memory unit 120, a control unit 130, a sensor unit 140, a voice output unit 150, an input unit 160, and a display unit 170.

The communication unit 110 is implemented using, for example, an NIC (Network Interface Card). The communication unit 110 is a communication interface connected to the content device 10 in a wired manner or a wireless manner via the network N, and controls the communication of information with the content device 10. When any content is received from the content device 10, the communication unit 110 outputs the received content to the control unit 130.

The sensor unit 140 includes various sensors. For example, the sensor unit 140 includes a GNSS (Global Navigation Satellite System). A GNSS sensor uses the GNSS and receives radio waves that include positioning data transmitted from a navigation satellite. The positioning data is used in detecting the absolute location of the vehicle from the latitude information and the longitude information. Meanwhile, regarding the GNSS to be used, it is possible to use the GPS (Global Positioning System) or some other system. The sensor unit 140 outputs the positioning data, which is generated by the GNSS sensor, to the control unit 130.

Moreover, the sensor unit 140 includes a vehicle velocity sensor, which detects the running velocity of the vehicle and generates vehicle velocity data corresponding to the running velocity. Then, the sensor unit 140 outputs the vehicle velocity data, which is generated by the vehicle velocity sensor, to the control unit 130.

The memory unit 120 is implemented, for example, using a semiconductor memory device such as a RAM (Random Access Memory) or a flash memory; or using a memory device such as a hard disk or an optical disc. For example, the memory unit 120 is used to store the information (such as an information processing program and data) that is for use in the operations performed by the control unit 130.

Moreover, as illustrated in FIG. 2, the memory unit 120 includes a map information storing unit 121 and a running information storing unit 122. The map information storing unit 121 is used to store a variety of information related to the map. The running information storing unit 122 is used to store the running history information indicating the running history of the concerned vehicle. For example, as the running history information, the running information storing unit 122 is used to store the information related to the roads and the travel routes on which the vehicle has run, and to store information in which the location information and the velocity information of the vehicle at each timing is held in a corresponding manner. The information related to the travel routes as stored in the running information storing unit 122 can be any type of information as long as it is related to the travel routes on which the vehicle has actually run. For example, the running information storing unit 122 is used to store the information related to a travel route taken by the vehicle when no route was set in the navigation function of the information processing device 100. Alternatively, when a route is set in the navigation function of the information processing device, the running information storing unit 122 can be used to store the information related to the travel route that was actually taken by the vehicle from among the travel routes proposed to the driver by a route guiding unit 131.

The control unit 130 is a controller implemented when, for example, various programs (equivalent to an example of the information processing program) stored in the internal memory device of the information processing device 100 are implemented by a CPU (Central Processing Unit), an MPU (Micro Processing Unit), an ASIC (Application Specific Integrated Circuit), or an FPGA (Field Programmable Gate Array) using a memory area, such as the RAM, as the work area. In the example illustrated in FIG. 2, the control unit 130 includes the route guiding unit 131, an obtaining unit 132, an identifying unit 133, a determining unit 134, an estimating unit 135, and an output control unit 136.

The route guiding unit 131 implements the navigation function of the information processing device 100. More particularly, when route settings are received from the driver, the route guiding unit 131 performs a route search from the point of departure set by the driver up to the destination set by the driver. For example, the route guiding unit 131 obtains information related to the point of departure and the destination corresponding to an input operation received by the input unit 160. Once the information related to the point of departure and the destination is obtained, the route guiding unit 131 refers to the map information storing unit 121 and obtains map information. Subsequently, using the map information, the route guiding unit 131 searches for the routes from the point of departure up to the destination. Moreover, according to the search result, the route guiding unit 131 proposes the most suitable travel routes to the driver. If a proposed travel route is selected by the driver, then the route guiding unit 131 controls the voice output unit 150 to output voice navigation related to the route guidance according to the selected travel route. Meanwhile, the route guiding unit 131 can store, in the running information storing unit 122, the information related to the travel routes that were actually taken by the vehicle from among the travel routes proposed to the driver.

The obtaining unit 132 obtains actual location information indicating the actual location of the vehicle. More particularly, the obtaining unit 132 obtains positioning data, which is generated by the GNSS sensor of the sensor unit 140, from the GNSS sensor of the sensor unit 140. Then, from the positioning data, the obtaining unit 132 obtains, as the actual location of the vehicle, latitude information and longitude information indicating the actual location of the vehicle.

Moreover, the obtaining unit 132 obtains the running history information indicating the running history of the vehicle. For example, the obtaining unit 132 obtains the location information of the vehicle at each timing from the GNSS sensor of the sensor unit 140. Then, based on the location information of the vehicle at each vehicle, the obtaining unit 132 identifies the roads and the travel routes on which the vehicle has run. Furthermore, the obtaining unit 132 obtains, from the vehicle velocity sensor of the sensor unit 140, the vehicle velocity data generated by the vehicle velocity sensor of the sensor unit 140. Then, from the vehicle velocity data, the obtaining unit 132 obtains velocity information indicating the running velocity of the vehicle. Subsequently, the obtaining unit 132 stores, as the running history information in the running information storing unit 122, the information related to the roads and the travel routes on which the vehicle has run, and the information in which the location information and the velocity information of the vehicle at each timing is held in a corresponding manner.

Based on the running history information, the identifying unit 133 identifies frequently-visited places indicating the places at which the number of times of a predetermined action taken by the vehicle exceeds a predetermined count. As an example, the identifying unit 133 identifies, as a frequently-visited place, a travel route that is familiar to the vehicle. More particularly, the identifying unit 133 refers to the running information storing unit 122 and obtains the running history information of the vehicle. Then, based on the running history information, the identifying unit 133 identifies a frequently-visited travel route (such as a commutation route) on which the running count of the vehicle exceeds a first-type count. Moreover, along with identifying the frequently-visited travel route, the identifying unit 133 can identify the following information from the running history information: the points of departure, the destinations, the time slots of departure, and the days of departure when the vehicle had taken the concerned frequently-visited travel route in the past. Herein, based on the running history information obtained within a predetermined recent period of time (for example, six months), the identifying unit 133 can identify the frequently-visited places at which the number of times of a predetermined action taken by the vehicle exceeds a predetermined count.

Based on the actual location information of the vehicle, the determining unit 134 determines whether or not the vehicle is taking a predetermined action at a frequently-visited place. More particularly, the determining unit 134 determines whether or not the vehicle is taking the action of running toward a first-type destination (for example, the home) in the frequently-visited travel route. For example, when the travel route is set by the route guiding unit 131, the determining unit 134 collates the travel route currently set by the route guiding unit 131 and the destination of that travel route with the frequently-visited travel route identified by the identifying unit 133 and the destination of that frequently-visited travel route. If a first-type frequently-visited travel route is found for which the two sets of information are matching, then the determining unit 134 determines that the vehicle is currently taking the action of running toward the first-type destination on the first-type frequently-visited travel route. Alternatively, for example, if no travel route is set by the route guiding unit 131, then the determining unit 134 collates the conditions such as the actual location (the point of departure) of the vehicle, the time slot corresponding to the current time, and the current day of week with the conditions, such as the point of departure, the destination, the time slot of departure, and the day of departure, that were present at the time when the frequently-visited travel route was taken in the past and that are identified by the identifying unit 133 along with identifying the frequently-visited travel route. If a first-type frequently-visited travel route for which the two sets of conditions are matching is found, then the determining unit 134 predicts that the regular travel would be undertaken this time too and determines that the vehicle would use the first-type frequently-visited travel route and would take the action of running toward the first-type destination that corresponds to the first-type frequently-visited travel route.

Based on the actual location information and the running history information, the estimating unit 135 estimates the duration for which voice navigation need not be output. More particularly, when the determining unit 134 determines that the vehicle is taking a predetermined action at a frequently-visited place, the estimating unit 135 estimates the duration for which the vehicle is taking the predetermined action at the frequently-visited place and estimates that the estimated duration is the duration for which voice navigation need not be output. For example, when the determining unit 134 determines that the vehicle is taking the action of running toward the first-type destination on a frequently-visited travel route, the estimating unit 135 estimates the required time for the vehicle to reach the first-type destination. For example, based on the actual location information of the vehicle and the location information of the first-type destination as obtained by the obtaining unit 132, the estimating unit 135 estimates the running distance from the actual location to the first-type destination along the frequently-visited travel route. Moreover, the estimating unit 135 refers to the running information storing unit 122 and estimates the average running velocity of the vehicle on the frequently-visited travel route. Then, the estimating unit 135 divides the running distance from the actual location to the first-type destination by the average running velocity of the vehicle and estimates the required time for the vehicle to reach the first-type destination. Meanwhile, the estimating unit 135 can estimate the required time for the vehicle to reach the first-type destination also by performing correction based on the current traffic information (such as the traffic congestion situation). Then, the estimating unit 135 estimates that the estimated required time represents the duration for which voice navigation need not be output.

The output control unit 136 controls the output of the content. More particularly, the output control unit 136 obtains the content from the communication unit 110. When the determining unit 134 determines that the vehicle is taking the action of running toward the first-type destination on a frequently-visited travel route, the output control unit 136 selects, from among the obtained content and as the content that is related to the frequently-visited travel route being taken at present and that is different than the voice navigation repeated every time the vehicle runs on the frequently-visited travel route, the content such as a news or a voice advertisement that fits within the duration for which voice navigation need not be output. In the following explanation "the period of time for which voice navigation need not be output as estimated by the estimating unit 135" is sometimes referred to as the "period of time estimated by the estimating unit 135". Moreover, in the following explanation "the duration for which voice navigation need not be output as estimated by the estimating unit 135" is sometimes referred to as the "duration estimated by the estimating unit 135". For example, the output control unit 136 compares the duration estimated by the estimating unit 135 with the reproduction time of each obtained content and selects, from among the obtained content, the content having a shorter reproduction time than the duration estimated by the estimating unit 135. For example, from among long-version voice advertisements and short-version voice advertisements, the output control unit 136 selects the advertisements that fit within the duration. Then, the output control unit 136 controls the voice output unit 150 to output the audio, which is included in the selected content, in the period of time estimated by the estimating unit 135. Meanwhile, if the selected content includes a video, then the output control unit 136 controls the display unit 170 to display the video, which is included in the selected content, in the period of time estimated by the estimating unit 135.

Meanwhile, if the determining unit 134 determines that the vehicle is not running on a frequently-visited travel route; then, according to the actual location of the vehicle, the output control unit 136 controls the voice output unit 150 to output voice navigation about the route guidance (such as guiding about right turns and left turns) and traffic information (congestion/traffic restrictions/accident-prone locations in the surrounding area). Moreover, the output control unit 136 controls the voice output unit 150 to output, from among the content obtained by the communication unit 110, voice navigation about recommendations information (recommendations about surrounding facilities) related to the travel route being currently taken. Meanwhile, even if no route is set in the route guiding unit 131, the output control unit 136 controls the voice output unit 150 to output voice navigation about traffic information or recommendations information according to the actual location of the vehicle.

The voice output unit 150 includes a speaker and outputs a variety of audio from the speaker under the control performed by the output control unit 136. The voice output unit 150 outputs, for example, a news or a voice advertisement as the audio included in the content selected by the output control unit 136.

The input unit 160 receives input of various operations from the user. For example, the input unit 160 can receive various operations from the user via a display screen (for example, the display unit 170) according to the touch-sensitive panel function. For example, the input unit 160 receives an input operation regarding the information related to the point of departure and the destination from the driver of the vehicle. Moreover, the input unit 160 can receive various operations from buttons installed in the information processing device 100 or from a keyboard or a mouse connected to the information processing device 100.

Moreover, the input unit 160 includes a voice recognition function (for example, a microphone) and hence recognizes the voice of the user. Thus, the input unit 160 can receive various operations from the user by recognizing the voice of the user.

The display unit 170 is, for example, a display screen implemented using a liquid crystal display or an organic EL (Electro-Luminescence) display, and represents a display device for displaying a variety of information. The display unit 170 displays a variety of information under the control performed by the control unit 130. For example, the display unit 170 is used to display the travel route and the map data that is proposed by the route guiding unit 131. Moreover, under the control performed by the output control unit 136, the display unit 170 is used to display the video included in the content selected by the output control unit 136. Meanwhile, when a touch-sensitive panel is installed in the information processing device 100, the input unit 160 and the display unit 170 are integrated together. In the following explanation, the display unit 170 is sometimes referred to as the screen.

### [3. Flow of information processing]

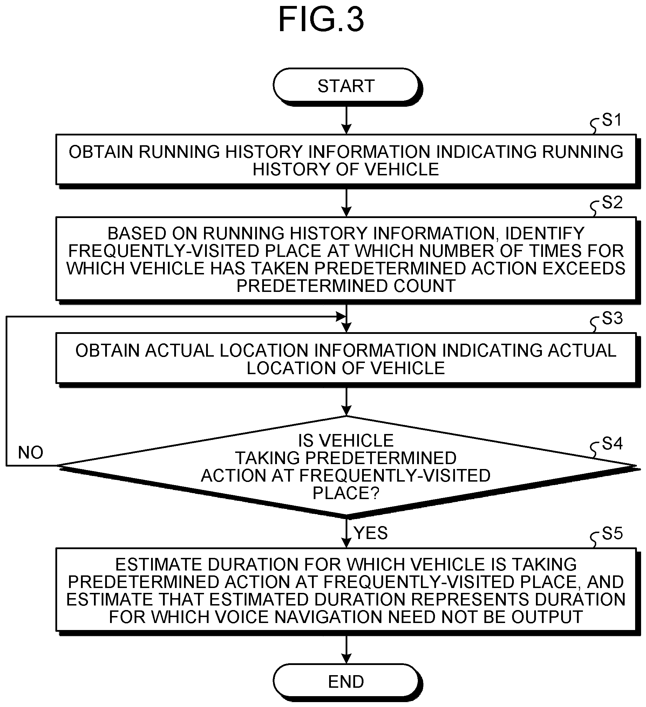

Explained below with reference to FIG. 3 is the flow of information processing performed according to the embodiment. FIG. 3 is a flowchart for explaining the flow of information processing performed according to the embodiment. In the example illustrated in FIG. 3, in the information processing device 100, the obtaining unit 132 obtains the running history information indicating the running history of the vehicle (Step S1). Then, in the information processing device 100, based on the running history information obtained by the obtaining unit 132, the identifying unit 133 identifies a frequently-visited place representing the place at which the number of times for which the vehicle has taken a predetermined action exceeds a predetermined count (Step S2). Moreover, in the information processing device 100, the obtaining unit 132 obtains the actual location information indicating the actual location of the vehicle (Step S3). Then, in the information processing device 100, based on the actual location information obtained by the obtaining unit 132, the determining unit 134 determines whether or not the vehicle is taking a predetermined action at the frequently-visited place (Step S4).

In the information processing device 100, if it is determined that the vehicle is not taking the predetermined action at the frequently-visited place (No at Step S4), then the obtaining unit 132 again obtains the actual location information indicating the actual location of the vehicle (Step S3). On the other hand, in the information processing device 100, if it is determined that the vehicle is taking the predetermined action at the frequently-visited place (Yes at Step S4), then the determining unit 134 estimates the duration for which the vehicle is taking the predetermined action at the frequently-visited place and estimates that the estimated duration represents the duration for which voice navigation need not be output (Step S5).

### [4. Modification examples]

The operations according to the embodiment described above can be implemented in various other forms other than the embodiment described above.

### [4-1. Determination of least amount of time for which vehicle is on familiar road]

In the embodiment described above, the explanation is given about the case in which, as the duration for which voice navigation need not be output, the estimating unit 135 estimates the required time for the vehicle, which is running on a frequently-visited travel route on which it has run for a number of times exceeding the first-type count, to reach the destination. The following explanation is given about a case in which, as the duration for which voice navigation need not be output, the estimating unit 135 estimates the required time for the vehicle, which is running on a frequently-visited road on which it has run for a number of times exceeding a second-type count, to reach the junction between the frequently-visited road and another highway (excluding narrow city streets) that is not identified as a frequently-visited road.

The information processing device 100 is equipped with the function by which, while the vehicle is running on a frequently-visited road (hereinafter, sometimes referred to as a familiar road), voice navigation for a travel route such as route guidance (such as guiding about right turns and left turns), traffic information (congestion/traffic restrictions/accident-prone locations in the surrounding area), and recommendations information (recommendations about surrounding facilities) that is repeated every time the vehicle runs on a travel route is not output (i.e., voice navigation is skipped). In the information processing device 100 according to the present modification example, even in the case in which the destination is either not set or is not yet predictable, the output of voice navigation can be skipped during the period of time in which the vehicle is predicted to run on a familiar road. Hence, the period of time for which the vehicle is running on a familiar road is estimated as the period of time for which voice navigation need not be output. That is, as the duration for which voice navigation need not be output, the information processing device 100 estimates the duration for which the vehicle is running on a familiar road.

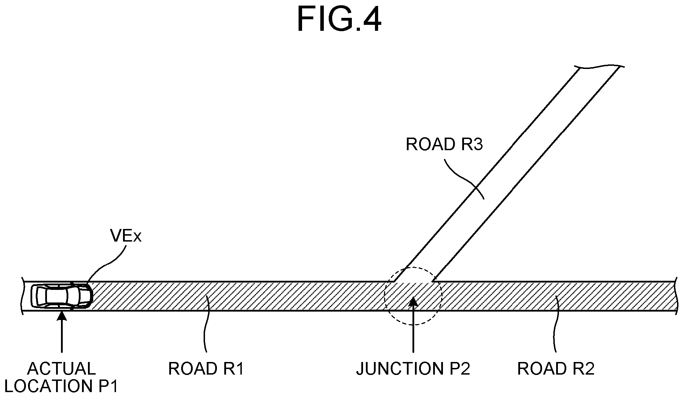

FIG. 4 is a diagram for explaining an example of the information processing performed according to the modification example. In FIG. 4, an actual location P1 represents the actual location of a vehicle VEx. Moreover, roads R1 and R2 represent familiar roads for the vehicle VEx. A road R3 represents another highway that diverges from the road R1 and that is not a familiar road for the vehicle VEx. Furthermore, a junction P2 represents the connecting location of the roads R1 and R3. Meanwhile, in the following explanation, the vehicle VEx is referred to without using the reference numeral.

The identifying unit 133 identifies familiar roads for the vehicle as frequently-visited places. More particularly, the identifying unit 133 refers to the running information storing unit 122 and obtains the running history information of the vehicle. Then, based on the running history information, the identifying unit 133 identifies, as familiar roads for the vehicle, frequently-visited roads on which the vehicle has run for a number of times exceeding the second-type count. In the example illustrated in FIG. 4, the roads R1 and R2 represent frequently-visited roads.

The determining unit 134 determines whether or not the vehicle is taking the action of running on a frequently-visited road. For example, based on the actual location information of the vehicle as obtained by the obtaining unit 132 and based on the location information of the frequently-visited road as identified by the identifying unit 133, the determining unit 134 determines whether or not the vehicle is present on the frequently-visited road. If it is determined that the vehicle is present on the frequently-visited road, then the determining unit 134 determines whether or not the vehicle is running. For example, the determining unit 134 determines whether or not the vehicle is in the running state according to the vehicle velocity data generated by the vehicle velocity sensor of the sensor unit 140. If it is determined that the vehicle is in the running state, then the determining unit 134 determines that the vehicle is taking the action of running on the frequently-visited road. In the example illustrated in FIG. 4, it is determined that the vehicle VEx is taking the action of running on the road R1 representing a frequently-visited road.

If the determining unit 134 determines that the vehicle is taking the action of running on a frequently-visited road, then the estimating unit 135 estimates the required time for the vehicle to reach the junction between the frequently-visited road and another highway that is not a frequently-visited road. In the example illustrated in FIG. 4, the estimating unit 135 estimates the required time for the vehicle to reach the junction P2 at which the road R1 representing a frequently-visited road connects with the road R3 representing a highway but not representing a frequently-visited road. For example, based on the actual location information indicating the actual location P1 of the vehicle as obtained by the obtaining unit 132 and based on the location information indicating the location of the junction P2, the estimating unit 135 estimates the running distance from the actual location P1 to the junction P2. Moreover, the estimating unit 135 refers to the running information storing unit 122 and estimates the average running velocity of the vehicle on frequently-visited roads. Then, the estimating unit 135 divides the running distance from the actual location P1 to the junction P2 by the average running velocity of the vehicle and estimates the required time for the vehicle to reach the junction P2. Subsequently, the estimating unit 135 estimates that the estimated required time represents the duration for which voice navigation need not be output.

### [4-2. Determination of usual pick-up halting]

In the embodiment described above, the explanation is given about the case in which, as the duration for which voice navigation need not be output, the estimating unit 135 estimates the required time for the vehicle, which is running on a frequently-visited travel route on which it has run for a number of times exceeding the first-type count, to reach the destination. The following explanation is given about a case in which, as the duration for which voice navigation need not be output, the estimating unit 135 estimates the required time for the vehicle, which is halting at a halting place at which the halting count of the vehicle exceeds a third-type count, to depart from the halting place.

When the vehicle is halting at a halting place at which it always halts for a fixed period of time, an unoccupied time becomes available till the departure. Hence, based on the running history information, the information processing device 100 estimates that the required time for departure from a usual halting place represents the period of time for which voice navigation need not be output. That is, the information processing device 100 estimates the required time for departure from a usual halting place as the duration for which voice navigation need not be output.

The identifying unit 133 identifies, as a frequently-visited place, a halting place at which the vehicle always halts. More particularly, the identifying unit 133 refers to the running information storing unit 122 and obtains the running history information of the vehicle. Then, based on the running history information, the identifying unit 133 identifies, as a halting place at which the vehicle always halts, a frequent halting place representing a halting place at which the halting count of the vehicle exceeds the third-type count. Moreover, based on the running history information, in addition to obtaining the halting place at which the vehicle halts on a frequent basis, the identifying unit 133 also obtains a halting start timing at which the halting is started at the concerned halting place. If the halting start timings are localized in a predetermined time slot, then the identifying unit 133 can identify the average timing of the halting start timing.

The determining unit 134 determines whether or not the vehicle is taking the action of halting at a frequent halting place. For example, based on the actual location information of the vehicle as obtained by the obtaining unit 132 and based on the location position of the frequent halting place identified by the identifying unit 133, the determining unit 134 determines whether or not the vehicle is present at the frequent halting place. If it is determined that the vehicle is present at the frequent halting place, then the determining unit 134 determines whether or not the vehicle is halting. If it is determined that the vehicle is in the halting state, then the determining unit 134 determines that the vehicle is taking the action of halting at the frequent halting place. Moreover, if the identifying unit 133 identifies the average timing of the halting start timings at the halting place; then the determining unit 134 can determine that, when the halting at the concerned halting place is started in a predetermined time slot including the average timing of the halting start timing, that is, when the vehicle is halted at the usual halting place at the usual timing, the vehicle is taking the action of halting at the frequent halting place.

If the determining unit 134 determines that the vehicle is taking the action of halting at a frequent halting place, then the estimating unit 135 estimates the required time for the vehicle to depart from the frequent halting place. For example, based on either the average time or the shortest time between halting at a frequent halting place and departing from the frequent halting place as detected from the running history information and based on the halting start timing at the frequent halting place, the estimating unit 135 estimates the departure timing of the vehicle from the frequent halting place, and estimates that the period of time till the estimated departure timing represents the required time for the vehicle to depart. Then, the estimating unit 135 estimates that the estimated required time represents the duration for which voice navigation need not be output. Meanwhile, if the determining unit 134 determines that the vehicle has halted at the usual halting place at the usual timing; then, based on the average timing of the departure timings at the frequent halting place as detected from the running history information or based on the earliest departure timing, the estimating unit 135 can estimate the departure timing of the vehicle from the frequent halting place, and can estimate that the period of time till the estimated departure timing represents the required time for the vehicle to depart.

### [4-3. Determination of usual idling]

In the embodiment described above, the explanation is given about the case in which, as the duration for which voice navigation need not be output, the estimating unit 135 estimates the required time for the vehicle, which is running on a frequently-visited travel route on which it has run for a number of times exceeding the first-type count, to reach the destination. The following explanation is given about a case in which the estimating unit 135 estimates the idling period of the vehicle as the duration for which voice navigation need not be output.

When the vehicle is idling away at an idling place at which it always idles away, an unoccupied time becomes available till the departure. Hence, based on the running history information, the information processing device 100 estimates that the required time for departure from a usual idling place represents the period of time for which voice navigation need not be output. That is, the information processing device 100 estimates the required time for departure from the usual idling place as the duration for which voice navigation need not be output.

The memory unit 120 is used to store, as the running history information, the information in which the spot for ignition of the engine of the vehicle, the date and time for ignition of the engine of the vehicle, and the idling period of the vehicle (the period of time from the ignition to the departure of the vehicle) is stored in a corresponding manner.

The sensor unit 140 can include an idling sensor capable of detecting the idling state of the vehicle. For example, the sensor unit 140 can include an idling sensor capable of detecting the ignition of the engine of the vehicle and detecting the period of time from the ignition of the engine to the departure. When the idling state of the vehicle is detected, the idling sensor generates idling data that contains information about the ignition of the engine of the vehicle and the period of time from the ignition of the engine to the departure.

The identifying unit 133 identifies, as a frequently-visited place an idling place at which the vehicle always idles away. More particularly, the identifying unit 133 refers to the running information storing unit 122 and obtains the running history information of the vehicle. Then, based on the running history information, the identifying unit 133 identifies, as an idling place at which the vehicle always idles away, a frequent idling place representing an idling place at which the idling count of the vehicle exceeds a fourth-type count.

The determining unit 134 determines whether or not the vehicle is taking the action of halting at a frequent idling place. For example, based on the actual location information of the vehicle as obtained by the obtaining unit 132 and based on the location position of the frequent idling place identified by the identifying unit 133, the determining unit 134 determines whether or not the vehicle is present at the frequent idling place. If it is determined that the vehicle is present at the frequent idling place, then the determining unit 134 determines whether or not the vehicle is idling away. For example, the determining unit 134 obtains, from the idling sensor of the sensor unit 140, idling data generated by the idling sensor of the sensor unit 140. Then, according to the obtained idling data, the determining unit 134 determines whether or not the vehicle is in the idling state. If it is determined that the vehicle is in the idling state, then the determining unit 134 determines that the vehicle is taking the action of idling away at the frequent idling place.

If the determining unit 134 determines that the vehicle is taking the action of idling away at a frequent idling place, then the estimating unit 135 estimates the idling period from the ignition of the engine of the vehicle to the departure of the vehicle. For example, based on the running history information, the estimating unit 135 estimates the average idling period at the frequent idling place, and estimates that the estimated average idling period represents the required time for the vehicle to depart from the frequent idling place. Then, the estimating unit 135 estimates that the estimated required time represents the duration for which voice navigation need not be output.

Moreover, based on the running history information, the estimating unit 135 can calculate the idling period for each ignition spot, each ignition timing, and each ignition day regarding the engine of the vehicle; and can estimate that the statistical value of the calculated idling period represents the duration for which voice navigation need not be output. For example, the estimating unit can calculate the statistical value of the idling period for each season. That is because, for example, it is believed that the idling period tends to be longer in winter.

### [5. Effects]

As explained above, the information processing device 100 according to the embodiment outputs voice navigation according to the actual location of the vehicle, and includes the obtaining unit 132 and the estimating unit 135. The obtaining unit 132 obtains the actual location information indicating the actual location of the vehicle, and obtains the running history information indicating the running history of the vehicle. Then, based on the actual location information and the running history information, the estimating unit 135 estimates the duration for which voice navigation need not be output.

As a result, for example, even when no route is set in the navigation function of the information processing device 100, based on the running history information and the actual location information of the vehicle, the information processing device 100 becomes able to predict the duration of the unoccupied time in the recent output of voice navigation. Moreover, as a result of becoming able to predict the duration of the unoccupied time in the recent output of voice navigation, the information processing device 100 can selectively output the content that fits in the concerned duration. Hence, for example, when an audio output, such as a news or an advertisement, is discontinued midway; the information processing device 100 can output, at a stretch without breaking continuity, such content which easily causes a loss of the content-wise relevance before and after the discontinuation. Moreover, the information processing device 100 can selectively output, from among long-version voice advertisements and short-version voice advertisements, the advertisements that fit within the duration. Hence, the information processing device 100 can make the audio content easy to understand for the listener of the audio content, thereby becoming able to enhance the output effect of the audio content.

Moreover, the information processing device 100 further includes the identifying unit 133 and the determining unit 134. Based on the running history information, the identifying unit 133 identifies a frequently-visited place representing a place at which the number of times of a predetermined action taken by the vehicle exceeds a predetermined count. Then, based on the actual location information, the determining unit 134 determines whether or not the vehicle is taking the predetermined action at the frequently-visited place. If the determining unit 134 determines that the vehicle is taking the predetermined action at the frequently-visited place, then the estimating unit 135 estimates the duration for which the vehicle is taking the predetermined action at the frequently-visited place, and estimates that the estimated duration represents the duration for which voice navigation need not be output.

As a result, for example, even when no route is set in the navigation function of the information processing device 100, based on the running history information and the actual location information of the vehicle, the information processing device 100 can appropriately estimate, as the duration of the recent unoccupied time in which voice navigation was not output, the duration for which the vehicle is taking a predetermined action at a frequently-visited place.

Moreover, the identifying unit 133 identifies, as a frequently-visited place, a travel route on which the number of times for which the vehicle takes the action of running toward the first-type destination exceeds the first-type count. The determining unit 134 determines whether or not the vehicle is taking the action of running toward the first-type destination in the travel route. If the determining unit 134 determines that the vehicle is taking the action of running toward the first-type destination in the travel route, then the estimating unit 135 estimates the required time for the vehicle to reach the first-type destination and estimates that the estimated required time represents the duration for which voice navigation need not be output.

As a result, for example, even when no route is set in the navigation function of the information processing device 100, it becomes possible for the information processing device 100 to appropriately estimate the duration for which the vehicle is running on a familiar road as the duration of the recent unoccupied time in which voice navigation was not output.

Moreover, the identifying unit 133 identifies, as a frequently-visited place, a road on which the vehicle has taken the action of running for a number of times exceeding the second-type count. The determining unit 134 determines whether or not the vehicle has taken the action of running on the road identified as the frequently-visited place. If the determining unit 134 determines that the vehicle has taken the action of running on the road identified as the frequently-visited place, then the estimating unit 135 estimates the required time for the vehicle to reach the junction between the road, which is identified as the frequently-visited place, and another road not identified as a frequently-visited place, and estimates that the estimated required time represents the duration for which voice navigation need not be output. Herein, another road implies a road other than a narrow city street; and the estimating unit 135 excludes narrow city streets, which have got a relatively less possibility of vehicles running thereon, from the estimation targets. That enables estimation of a more practical duration for which voice navigation need not be output.

As a result, for example, even when no route is set in the navigation function of the information processing device 100 and when the course is not predictable, the information processing device 100 becomes able to identify the period of time for which the vehicle is certainly running on familiar roads, and to appropriately estimate the duration of the recent unoccupied time in which voice navigation was not output.

Furthermore, the identifying unit 133 identifies, as a frequently-visited place, a halting place at which the vehicle has taken the action of halting for a number of times exceeding the third-type count. The determining unit 134 determines whether or not the vehicle is taking the action of halting at the halting place. If the determining unit 134 determines that the vehicle is taking the action of halting at the halting place, then the estimating unit 135 estimates the required time for the vehicle to depart from the halting place, and estimates that the estimated required time represents the duration for which voice navigation need not be output.

As a result, for example, even when no route is set in the navigation function of the information processing device 100, it becomes possible for the information processing device 100 to appropriately estimate the duration for which the vehicle is halting at the usual halting place as the duration of the recent unoccupied time in which voice navigation was not output.

Meanwhile, the estimating unit 135 estimates that either the average timing of the departure timings of the vehicle at the halting place or the period of time till the earliest departure timing of the vehicle represents the required time for the vehicle to depart.

As a result, as the duration of the recent unoccupied time in which voice navigation was not output, the information processing device 100 can appropriately estimate the duration for which the vehicle is halting at the usual halting place.

Moreover, the identifying unit 133 identifies, as a frequently-visited place, an idling place at which the vehicle has taken the action of idling away for a number of times exceeding the fourth-type count. The determining unit 134 determines whether or not the vehicle is taking the action of idling away at the idling place. If the determining unit 134 determines that the vehicle is taking the action of idling away at the idling place, then the estimating unit 135 estimates the idling period from the ignition of the engine of the vehicle to the departure of the vehicle, and estimates that the estimated idling period represents the duration for which voice navigation need not be output.

As a result, for example, even when no route is set in the navigation function of the information processing device 100, it becomes possible for the information processing device 100 to appropriately estimate the duration for which the vehicle is halting at the usual idling place as the duration of the recent unoccupied time in which voice navigation was not output.

Meanwhile, the estimating unit 135 calculates the idling period for each ignition spot, each ignition timing, and each ignition day regarding the engine of the vehicle; and estimates that the statistical value of the calculated idling period represents the duration for which voice navigation need not be output.

As a result, for example, even when no route is set in the navigation function of the information processing device 100, it becomes possible for the information processing device 100 to appropriately estimate, for example, a different idling period for each season as the duration of the recent unoccupied time in which voice navigation was not output.

### [6. Hardware configuration]

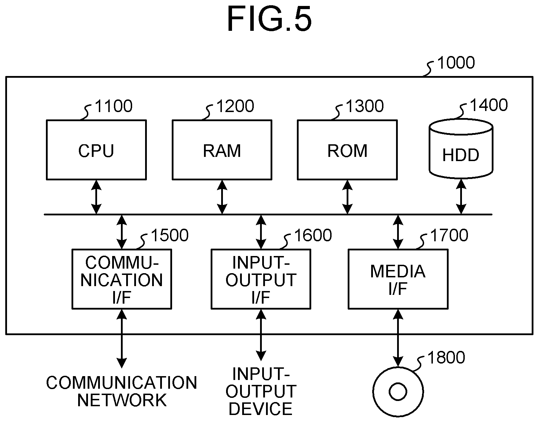

Meanwhile, the information processing device 100 according to the embodiment is implemented using, for example, a computer 1000 having a configuration illustrated in FIG. 5. FIG. 5 is a hardware configuration diagram illustrating an exemplary computer for implementing the functions of the information processing device 100. The computer 1000 includes a CPU 1100, a RAM 1200, a ROM 1300, an HDD 1400, a communication interface (I/F) 1500, an input-output interface (I/F) 1600, and a media interface (I/F) 1700.

The CPU 1100 performs operations according to the programs stored in the ROM 1300 or the HDD 1400, and controls the other constituent elements. The ROM 1300 is used to store a boot program that is executed by the CPU 1100 at the time of booting of the computer 1000, and to store the programs that are dependent on the hardware of the computer 1000.

The HDD 1400 is used to store the programs to be executed by the CPU 1100, and to store the data used in the programs. The communication interface 1500 receives the data from the other devices via a predetermined communication network and sends that data to the CPU 1100; and sends the data generated by the CPU 1100 to the other devices via a predetermined communication network.

The CPU 1100 controls an output device, such as a display, and an input device, such as a keyboard, via the input-output interface 1600. The CPU 1100 obtains data from the input device via the input-output interface 1600. Moreover, the CPU 1100 outputs the generated data to an output device via the input-output interface 1600. Meanwhile, instead of using the CPU 1100, it is also possible to use an MPU (Micro Processing Unit) or to use a GPU (Graphics Processing Unit) that requires enormous computational power.

The media interface 1700 reads programs or data stored in a recording medium 1800, and provides them to the CPU 1100 via the RAM 1200. The CPU 1100 loads those programs from the recording medium 1800 into the RAM 1200 via the media interface 1700, and executes the loaded programs. The recording medium 1800 is, for example, an optical recording medium such as a DVD (Digital Versatile Disc) or a PD (Phase change rewritable Disk); a magneto-optical recording medium such as an MO (Magneto-Optical disk); a tape medium; a magnetic recording medium; or a semiconductor memory.

For example, when the computer 1000 functions as the information processing device 100, the CPU 1100 of the computer 1000 executes the programs loaded into the RAM 1200 and implements the functions of the control unit 130. Herein, the CPU 1100 reads those programs from the recording medium 1800 and executes them. However, as another example, the programs can be obtained from another device via a predetermined communication network.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

### [7. Miscellaneous]

Of the processes described above in the embodiment and the modification examples, all or part of the processes explained as being performed automatically can be performed manually. Similarly, all or part of the processes explained as being performed manually can be performed automatically by a known method. Moreover, the processing procedures, specific names, various data, and information including parameters described in the embodiments or illustrated in the drawings can be changed as required unless otherwise specified. For example, the variety of information illustrated in the drawings is not limited to the illustrated information.

The constituent elements of the device illustrated in the drawings are merely conceptual, and need not be physically configured as illustrated. The constituent elements, as a whole or in part, can be separated or integrated either functionally or physically based on various types of loads or use conditions.

Meanwhile, the embodiment and the modification examples described above can be appropriately combined without causing any contradictions in the operation details.

### Reference Signs List

- 1: information processing system

- 10: content device
- 100: information processing device
- 110: communication unit
- 120: memory unit
- 121: map information storing unit
- 122: running information storing unit
- 130: control unit
- 131: route guiding unit
- 132: obtaining unit
- 133: identifying unit
- 134: determining unit
- 135: estimating unit
- 136: output control unit
- 140: sensor unit
- 150: voice output unit
- 160: input unit
- 170: display unit

## Claims

1. An information processing device that outputs voice navigation according to actual location of vehicle,
the information processing device comprising:
an obtaining unit that obtains
actual location information indicating actual location of the vehicle, and
running history information indicating running history of the vehicle; and
an estimating unit that, based on the actual location information and the running history information, estimates duration for which the voice navigation need not be output.

2. The information processing device according to claim 1, further comprising:
an identifying unit that, based on the running history information, identifies a frequently-visited place representing a place at which the vehicle has taken a predetermined action for a number of times exceeding a predetermined count; and
a determining unit that, based on the actual location information, determines whether or not the vehicle is taking the predetermined action at the frequently-visited place, wherein
when the determining unit determines that the vehicle is taking the predetermined action at the frequently-visited place, the estimating unit
estimates duration for which the vehicle is taking the predetermined action at the frequently-visited place, and
estimates that the estimated duration represents duration for which the voice navigation need not be output.

3. The information processing device according to claim 2, wherein
the identifying unit identifies, as the frequently-visited place, a travel route on which the vehicle has taken an action of running toward a first-type destination for a number of times exceeding a first-type count,
the determining unit determines whether or not the vehicle is taking the action of running toward the first-type destination on the travel route, and
when the determining unit determines that the vehicle is taking the action of running toward the first-type destination on the travel route, the estimating unit
estimates required time for the vehicle to reach the first-type destination, and
determines that the estimated required time represents duration for which the voice navigation need not be output.

4. The information processing device according to claim 2, wherein
the identifying unit identifies, as the frequently-visited place, a road on which the vehicle has taken an action of running for a number of times exceeding a second-type count,
the determining unit determines whether or not the vehicle is taking the action of running on the road identified as the frequently-visited place, and
when the determining unit determines that the vehicle is taking the action of running on the road identified as the frequently-visited place, the estimating unit
estimates required time for the vehicle to reach a junction between the road and other road which is not identified as the frequently-visited place, and
estimates that the estimated required time represents duration for which the voice navigation need not be output.

5. The information processing device according to claim 4, wherein the other road is a road other than a narrow city street.

6. The information processing device according to claim 2, wherein
the identifying unit identifies, as the frequently-visited place, a halting place at which the vehicle has taken an action of halting for a number of times exceeding a third-type count,
the determining unit determines whether or not the vehicle is taking the action of halting at the halting place, and
when the determining unit determines that the vehicle is taking the action of halting at the halting place, the estimating unit
estimates required time for the vehicle to depart from the halting place, and
estimates that the estimated required time represents duration for which the voice navigation need not be output.

7. The information processing device according to claim 6, wherein, as required time for the vehicle to depart, the estimating unit estimates
either average timing of departure timings of the vehicle at the halting place,
or period of time till earliest departure timing of the vehicle.

8. The information processing device according to claim 2, wherein
the identifying unit identifies, as the frequently-visited place, an idling place at which the vehicle has taken an action of idling away for a number of times exceeding a fourth-type count,
the determining unit determines whether or not the vehicle is taking the action of idling away at the idling place, and
when the determining unit determines that the vehicle is taking the action of idling away at the idling place, the estimating unit
estimates idling period from ignition of engine of the vehicle to departure of the vehicle, and
estimates that the estimated idling period represents duration for which the voice navigation need not be output.

9. The information processing device according to claim 8, wherein the estimating unit
calculates idling period for each ignition spot, each ignition timing, and each ignition day regarding engine of the vehicle, and
estimates that statistical value of the calculated idling period represents duration for which the voice navigation need not be output.

10. An information processing method implemented in an information processing device that outputs voice navigation according to actual location of vehicle, the information processing method comprising:
an obtaining step that includes obtaining
actual location information indicating actual location of the vehicle, and
running history information indicating running history of the vehicle; and
an estimating step that, based on the actual location information and the running history information, includes estimating duration for which the voice navigation need not be output.

11. An information processing program that causes a computer, which is included in an information processing device that outputs voice navigation according to actual location of vehicle, to execute:
an obtaining step that includes obtaining
actual location information indicating actual location of the vehicle, and
running history information indicating running history of the vehicle; and
an estimating step that, based on the actual location information and the running history information, includes estimating duration for which the voice navigation need not be output.
